# EUROPEAN PATENT SPECIFICATION

(11) **EP 2 391 057 B1**
(45) Date of publication and mention of the grant of the patent: **20.06.2012**
(21) Application number: 09838659.2
(22) Date of filing: 22.10.2009
(51) Int. Cl.: H04L 12/14, H04W 4/24

(54) **Method for selecting the type of charging correlation ID and charging correlation system**
Verfahren zum Auswählen des Typs einer Vergebührungskorrelations-ID und Vergebührungskorrelationssystem
Procédé pour sélectionner le type d'identification de corrélation d'informations de facturation et système de corrélation d'informations de facturation

(30) Priority: 23.01.2009 CN 200910077598
(43) Date of publication of application: 30.11.2011
(73) Proprietor: Huawei Technologies Co., Ltd., Longgang District, Shenzhen Guangdong 518129 (CN)
(72) Inventor: CHAI, Xiaoqian, Shenzhen Guangdong 518129 (CN); SHAN, Mingjun, Shenzhen Guangdong 518129 (CN); KANG, Jiao, Shenzhen Guangdong 518129 (CN)
(74) Representative: Thun, Clemens
(86) International application number: PCT/CN2009/074565
(87) International publication number: WO 2010/083692

(56) References cited:
- EP-A1- 1 014 619
- CN-A- 1 430 849
- CN-A- 1 773 917
- CN-A- 101 163 020
- KR-A- 20080 016 334
- US-A1- 2008 010 179
- US-A1- 2008 010 179

## Description

### FIELD OF THE INVENTION

The present invention relates to the mobile communications field, and in particular, to a method and system for correlating charging information.

### BACKGROUND OF THE INVENTION

In the evolution and development process of a network, the circuit switched (CS) domain, being a traditional media bearer, has good quality of service (QoS), and the packet switched (PS) domain is an important bearer for data services. With the network convergence, the IP multimedia subsystem (IMS) may use the CS access or PS access as the bearer in the mobile network. Some services are also derived therein, including the voice call continuity (VCC) service, combining circuit switched CS and IMS services (CSI), and IMS centralized services (ICS). The ICS enables the IMS service to use the CS access as a media bearer. It provides the CS access with IMS control, so that the CS media call and IMS call services have the same service experience. In addition, the media bearer advantage of the CS domain is effectively used, and media call services with better QoS may be provided.

The ICS is used in multiple scenarios. The use of ICS may be based on a mobile switching center server (MSC server) enhanced for ICS, or an ICS user equipment (ICS UE), or an MSC server enhanced for ICS and an ICS UE, or a standard MSC server and a non ICS UE. In such scenarios of crossing the IMS domain and CS domain, because control and access are implemented respectively in the IMS domain and the CS domain, the IMS entity may not know the CS data (including media data and some subscription data) and nor does the CS domain know the state of the control plane signaling (for example, the state of an IMS session). Therefore, if the IMS domain or the CS domain completes the charging separately, the charging may be inaccurate due to incomplete charging information collected; if the IMS domain and the CS domain collect the charging information at the same time, repeated charging may occur due to failure to correlate the charging information in the IMS domain with the charging information in the CS domain.

In the prior art, the 3GPP IMS system defines an IMS charging identifier (ICID) and a general packet radio service charging identifier (GCID) for the charging data correlation. In this solution, the ICID and the GCID are exchanged between a bearer layer entity and the IMS entity, therefore implementing the charging correlation between the IMS and the bearer network. The solution is detailed as follows:

During the setup of a session, the UE activates the Packet Data Protocol (PDP) context. In the PDP context authorization process, the gateway GPRS support node (GGSN) and the policy decision function (PDF) exchange the IDs according to the following steps:
(1) In the authorization decision process, the PDF sends an ICID to the GGSN.
(2) The GGSN sends a GCID to the PDF in a report on the authorization decision.

The PDF sends the GCID to the proxy-call session control function (P-CSCF), and the P-CSCF forwards the GCID to the IMS entity on its home network. The GGSN adds the ICID in a charging data record (G-CDR). When a single IMS session requires multiple PDP contexts, one or more GCIDs are mapped to the same ICID. Then, the offline charging system performs correlated charging on the CDRs generated at different layers of the network according to different charging IDs.

European patent application 1 014 619 A1 discloses a method and a communication network comprising a packet switched network part and a circuit switched network part and an interface between the packet switched network part and the circuit switched network part. The circuit switched network part produces a call data record assigned to each call initiated and established from the circuit switched network part, the call initiating a session in the packet switched network part via the interface, and the packet switched network part generates a session data record assigned to the session and comprising session information being transferred from the packet switched network part to the circuit switched network part via the interface, and, within the circuit switched network part, means for adding the received session information to the call data record assigned to the initiated and established call, and means for charging and accounting the call on the basis of the call data record and the session information of the call data record.

US patent application 2008/0010179 A1 discloses a method and communication network for providing charging for offnet sessions between an IMS network and a legacy network. The billing system correlates charging records generated by the IMS network for the session with a charging record generated by the legacy network for the session based on a charging ID included in the charging records, and the charging ID is generated and transmitted to the legacy network by the by the IMS network.

During the implementation of the present invention, the inventor discovers the following weaknesses in the prior art: The correlation between the PS domain and the IMS domain is a many-to-many relationship, and a proper time is available for exchanging the IDs; however, the ICS may cross the CS domain and the IMS domain so that a unified exchange time is hard to determine. In addition, the relationship between CS media channels and IMS sessions is not a many-to-many relationship; if the CS domain and the IMS domain exchange IDs, the systems in these two domains need to be upgraded. Consequently, the system upgrade cost is increased, and the efficiency in correlating the charging information is decreased.

### SUMMARY OF THE INVENTION

The present invention provides a method and system, according to independent claims 1 and 6, respectively, for correlating charging information in the CS domain and the IMS domain to simplify the correlation performed by the charging system under different scenarios.

By using the method and system for correlating charging information of the embodiments of present invention, the AS judges the scenarios, and selects different correlation IDs. In this way, the most proper and simple correlation ID may be selected in different scenarios, therefore greatly simplifying the correlation performed by the charging system.

### BRIEF DESCRIPTION OF THE DRAWINGS

FIG 1 shows a structure of a charging correlation system in an embodiment of the present invention;
FIG 2 is a flowchart of a method for correlating charging information in an embodiment of the present invention;
FIG 3 is a flowchart of a method for correlating charging information in an embodiment of the present invention;
FIG 4 is a flowchart of a method for correlating charging information in an embodiment of the present invention;
FIG 5 is a flowchart of a method for correlating charging information in an embodiment of the present invention;
FIG 6 is a flowchart of a method for correlating charging information in an embodiment of the present invention;
FIG 7 is a flowchart of a method for correlating charging information in an embodiment of the present invention;
FIG 8 shows a structure of a system for correlating charging information in an embodiment of the present invention;
FIG 9 shows a structure of a first domain NE in an embodiment of the present invention;
FIG 10 shows a structure of a second domain NE in an embodiment of the present invention;
and
FIG 11 shows a structure of a system for correlating charging information in an embodiment of the present invention.

### DETAILED DESCRIPTION OF THE EMBODIMENTS

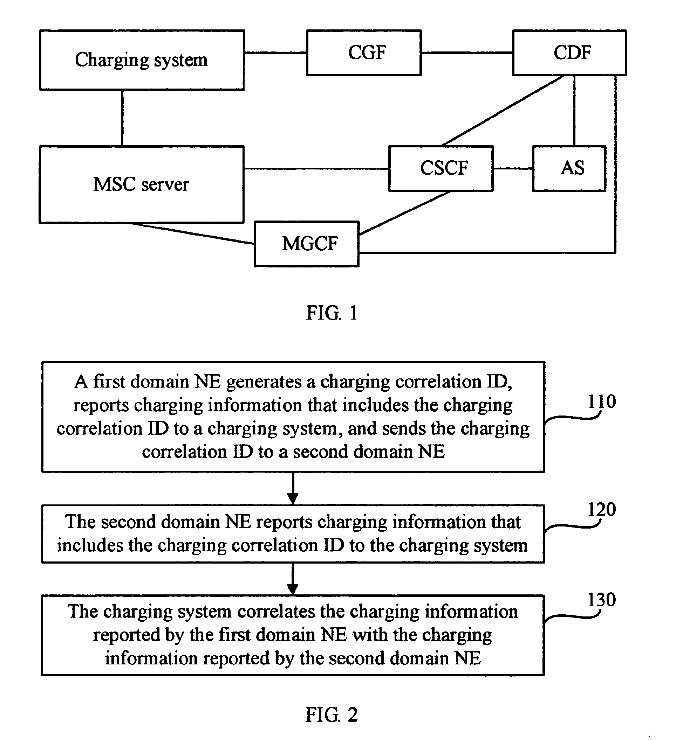

FIG 1 shows a structure of a charging correlation system in an embodiment of the present invention. In this structure, the application server (AS) in the IMS domain may be a service centralization and continuity application server (SCC AS) adapted to implement service control. The interface between the AS and the charging data function (CDF) is an Rf interface. The MSC server has a built-in CDF. If the MSC server enhances its ICS capability, the MSC server may be directly connected to a call session control function (CSCF) (interrogating/serving-call session control function (I/S-CSCF) in this embodiment; if the MSC server does not enhance the ICS capability, the MSC server may be connected to the CSCF through a media gateway control function (MGCF). The CDF is adapted to collect charging information and generate a CDR. Specifically, the charging gateway function (CGF) generates a CDR file, and uploads the CDR file to a charging system. The following embodiments are implemented based on the charging system.

FIG 2 is a flowchart of a method for correlating charging information in an embodiment of the present invention. The method includes the following steps:
Step 110: A first domain NE generates a charging correlation ID, reports charging information that includes the charging correlation ID to a charging system, and sends the charging correlation ID to a second domain NE.
Step 120: The second domain NE reports charging information that includes the charging correlation ID to the charging system.
Step 130: The charging system correlates the charging information reported by the first domain NE with the charging information reported by the second domain NE. Specifically, the charging system may correlate the charging information reported by the first domain NE with the charging information reported by the second domain NE according to the charging correlation ID.

The charging ID includes a CS call ID, an ICID, or a special PSI DN that may uniquely identify a user session.

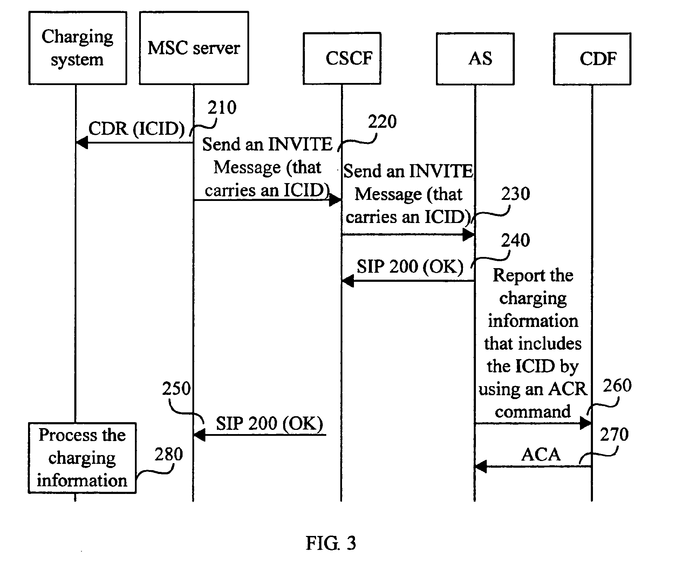

FIG 3 is a flowchart of a method for correlating charging information in an embodiment of the present invention. In this embodiment, the ICID is used as the charging correlation ID, which is used by the IMS domain. Because the ICID already exists in the IMS NE, the ICID is introduced in the CS domain and is added to the charging information reported by the MSC server. The method is detailed as follows:

When the MSC server that is a CS NE that may be connected to the IMS domain, generates a SIP message (for example, in the case of a mobile originated call, the MSC server generates a SIP INVITE message according to a received SETUP message); the MSC server generates an ICID, carries the ICID in the P-Charging-Vector header field of the SIP INVITE message sent to the IMS NE, and carries the ICID in the charging information reported to the charging system or in the generated CDR. In this way, the charging information generated by the IMS NE also includes the ICDI.

Or, when the MSC server receives a SIP message (for example, the MSC server receives a SIP INVITE message that is sent by the IMS NE and carries the ICID generated by the IMS NE in the case of a mobile terminated call), extracts the ICID from the P-Charging-Vector header field of the SIP INVITE message header, and carries the ICID in the reported charging information or in the generated CDR.

The method includes the following steps in a scenario of a mobile originated call (similar to a scenario of a mobile terminated call):
Step 210: After receiving a Setup message from the UE, the MSC server generates an ICID and a CDR that includes the ICID, and sends the CDR to the charging system.

Because the CDF is built in the MSC server, the MSC server may directly generate a CDR that includes the ICID.

To carry the ICID in the CDR in the CS domain, a field is added to a sub record of the CS call and event record (CSRecord). The following describes the addition of a field in the MOCallRecord (the process is similar in the MTCallRecord):

```
          MOCallRecord :.=SET
           {
            recordType                [0] RecordType,
            externalChargingID   [75] OPTIONAL
           };
```

Step 220 to step 230: The MSC server sends a SIP INVITE message to the AS in the IMS domain through the CSCF, and carries the ICID in the P-Charging-Vector header field of the SIP message header.

The AS in this step may be an SCC AS.

Specifically, the MSC server sends the SIP INVITE message that carries the ICID to the CSCF; the CSCF forwards the SIP INVITE message to the AS.

Step 240 to step 250: The AS returns a SIP 200 (OK) response to the MSC server through the CSCF.

Specifically, the AS returns a SIP 200 (OK) response to the CSCF; the CSCF sends the SIP 200 (OK) response to the MSC server.

Step 260: The AS reports charging information that includes the ICID to the CDF by using an ACR command of the Diameter protocol. The CDF generates a CDR, and sends the CDR to the charging system through the charging gateway function (CGF).

Step 270: The CDF sends an ACA answer message (ANM) to the AS.

Step 280: The charging system receives the CDR sent by the MSC server and the IMS NE, identifies the charging correlation ID field according to a field in the CDR, for example, the externalChargingID field in the CDR reported by the MSC server, and performs correlation on related charging information received from NEs in the IMS domain and the CS domain. The specific correlation method includes: searching the CDR reported by the MSC server for the externalChargingID field; if the externalChargingID field is available and equal to the ICID in the CDR reported by the AS, regarding the CDR as a correlated CDR, and performing correlation, for example, combining and subtracting.

By using the method for correlating charging information in this embodiment, only the MSC server in the CS domain needs to be upgraded to generate an ICID, and the ICID is carried in the charging information, without any change to the IMS domain, therefore lowering the network upgrade cost. In addition, because the IMS domain already supports the charging information correlation by using the ICID, the charging system may implement the correlation in an easier way, therefore improving the processing efficiency.

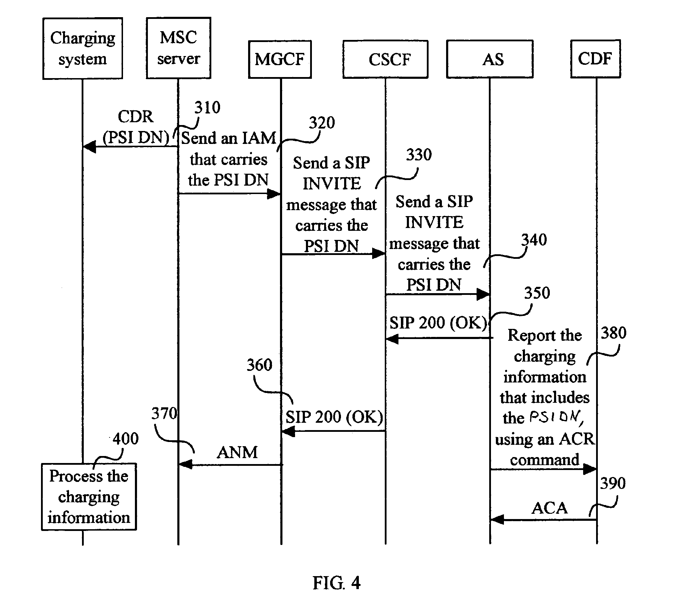

FIG 4 is a flowchart of a method for correlating charging information in an embodiment of the present invention. The scenario of this embodiment is as follows: In the ICS, if the UE exchanges service control signaling with the AS (the SCC AS in this embodiment) before performing a CS call and the AS generates a PSI DN for the call and returns the PSI DN to the UE, the PSI DN is used to correlate the service control signaling and media bearer signaling (that is, the media bearer related signaling sent between the MSC server and the IMS NE, which can uniquely identify a session) on the SCC AS. In this case, the PSI DN may be used as a correlation ID. The method in this embodiment includes the following steps:

Step 310: After receiving the Setup message from the UE, the MSC server obtains a PSI DN carried in the Setup message, generates a CDR according to the PSI DN, and reports the CDR to the charging system. Specifically, the MSC server uses the PSI DN as the value of the called number in the CDR and reports it to the charging system.

Step 320 to step 340: The MSC server sends a call setup instruction to the AS. The called number in the call setup instruction is the PSI DN.

Specifically, the MSC server sends an integrated services digital network user part (ISUP) initial address message (IAM) that carries the PSI DN to the MGCF.

The MGCF converts the message, generates a SIP INVITE message according to the ISUP IAM sent by the MSC server, carries the PSI DN in the SIP INVITE message, and sends the SIP INVITE message to the AS through the CSCF.

Step 350 to step 360: The AS returns a SIP 200 (OK) response to the MGCF through the CSCF.

Specifically, the AS correlates the service control signaling with the media bearer signaling by using the PSI DN (a real called number may be determined according to this correlation), replaces the PSI DN with the real called number, and sends a SIP 200 (OK) response to the CSCF; the CSCF sends the SIP 200 (OK) response to the MGCF.

Step 370: The MGCF returns an ANM message to the MSC server.

Step 380: The AS reports charging information that includes the real called number and the PSI DN to the CDF by using the ACR command of the Diameter protocol; the CDF generates a CDR that includes the PSI DN for the AS, where the CDR may be a general ASRecord or an extended CDR of the ICS based on the CDR of the AS, and sends the CDR to the charging system through the CGF.

The CDF writes the PSI DN into the AccessCorrelationID field of the CDR. To enable the charging system to identify the AccessCorrelationID field, a sub data type iCS-PSI-DN is added to the AccessCorrelationID field. Details are as follows:

```
           AccessCorrelationID ::= CHOICE
           {
            gPRS-Charging-Id                [2] INTEGER OPTIONAL,
            accessNetworkChargingIdentifier [4] GraphicString OPTIONAL
            iCS-PSI-DN
           }
```

Step 390: The CDF sends an ACA ANM to the AS.

Step 400: The charging system correlates the charging information according to the ID.

The charging system receives the CDR from the AS, identifies the correlation ID field in the CDR, that is, the iCS-PSI-DN in the AccessCorrelationID field according to the CDR type, and performs correlation on related charging information received from NEs in the IMS domain and the CS domain based on the identified charging correlation ID. The specific correlation method includes: searching the CDR reported by the MSC server for the calledNumber field; if the calledNumber field is the same as the iCS-PSI-DN in the CDR reported by the AS, regarding the CDR as a correlated CDR, and performing correlation, for example, combining and subtracting.

By using the method for correlating charging information in this embodiment, only the AS in the IMS domain needs to be upgraded, so that the AS may carry the PSI DN in the charging information, without any change to the CS domain, therefore lowering the network upgrade cost. In addition, to perform correlation, the charging system only needs to search the CDRs in the CS domain for a CDR where the called number is the same as the PSI DN, therefore simplifying the correlation performed by the charging system, and improving the efficiency of the charging system.

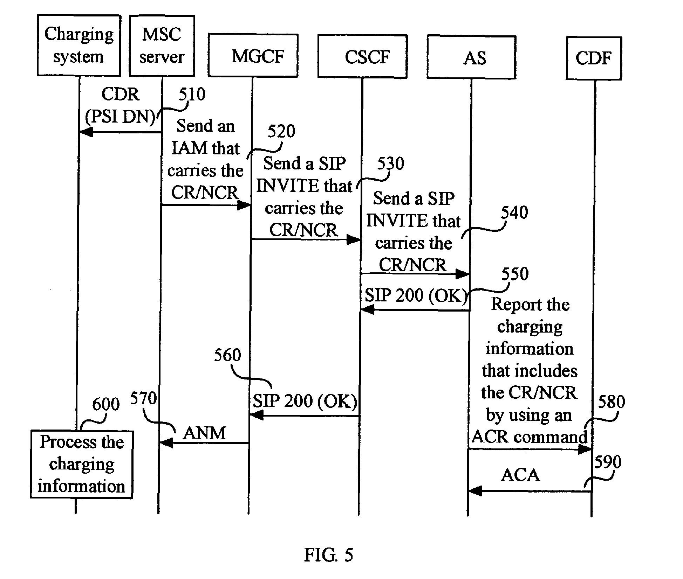

FIG 5 is a flowchart of a method for correlating charging information in an embodiment of the present invention. In this embodiment, the CS call ID is used as a charging correlation ID. Because the charging correlation ID already exists in the CS NE, the charging correlation ID is introduced in the IMS domain and added to the charging information reported by the IMS NE. In this embodiment, the CS call ID may be a call reference (CR) or a network call reference (NCR). The method is detailed as follows:

A CS call ID is generated (generated by the MSC server in the case of a mobile originated call and generated by the MSC server or the MGCF in the case of a mobile terminated call); when the signaling transfer entity in the CS domain and the IMS domain, that is, the MSC server or the MGCF, performs signaling transfer (for example, in the case of a mobile originated call, the MSC server generates a SIP INVITE message according to a received SETUP message; or the MSC server routes a call to the MGCF through an ISUP IAM message, and the MGCF generates a SIP INVITE message), the signaling transfer entity carries the CS call ID in the generated SIP INVITE message and the IMS NE carries the CS call ID in the reported charging information; the MSC server carries the call ID in a generated CDR;

Or, when the signaling transfer entity (that is, the MSC server or the MGCF) in the CS domain and the IMS domain receives a SIP INVITE signaling message (for example, in the case of a mobile terminated call), the signaling transfer entity generates a CS call ID, and carries the CS call ID in an ANM of the SIP INVITE sent to the IMS NE; the IMS NE carries the call ID in the reported charging information; the MSC server may carry the call ID when reporting the charging information.

The method for carrying the CS call ID includes: carrying the CS call ID in a header (for example, the P-Charging-Vector header field, to which a cscr field is added to carry the value) of the SIP INVITE message or the ANM thereof or in the Session Description Protocol (SDP) information; the CDF writes the CS call ID to the AccessCorrelationID field of the CDR. During the implementation, the charging information may also be correlated according to the CS call ID and the address of the MSC server. The address of the MSC server may be carried in the Via header field of the SIP message, and then sent to the IMS NE.

The following describes the specific process based on a mobile originated call scenario in which the MGCF generates a SIP INVITE message (the process is similar in a mobile terminated call scenario in which the MSC server generates a SIP INVITE message). This embodiment is based on the fact that the CR is used as a CS call ID, which is the same as the fact that the NCR is used as a CS call ID. The method includes the following steps.

Step 510: The MSC server receives a Setup message from the UE, generates a CDR according to the CR in the received Setup message, and reports the CDR to the charging system.

Step 520: The MSC server sends an ISUP IAM that carries the CR to the MGCF.

Step 530 to step 540: The MGCF converts the message, generates a SIP INVITE message whose message header or SDP information carries a CR according to the IAM sent by the MSC server, and sends the SIP INVITE message to the AS (for example, the SCC AS) through the CSCF.

Specifically, the MGCF sends a SIP INVITE message that carries the CR to the CSCF, and the CSCF sends the received SIP INVITE message to the AS.

Step 550 to step 560: The AS returns a SIP 200 (OK) response to the MGCF through the CSCF.

Specifically, the AS returns a SIP 200 (OK) response to the CSCF; the CSCF sends the SIP 200 (OK) response to the MGCF.

Step 570: The MGCF returns an ANM to the MSC server.

Step 580: The AS reports charging information that includes the CR to the CDF by using the ACR command of the Diameter protocol. The CDF generates a CDR (a general ASRecord or an extended CDR based on the CDR of the AS) according to the received charging information, and sends the CDR to the charging system through the CGF. The CR is written to the AccessCorrelationID field of the CDR. To enable the charging system to identify the processing method of the AccessCorrelationID field, a data type is added to the AccessCorrelationID field in this embodiment. Details are as follows:

```
          AccessCorrelationID ::= CHOICE
           {
            gPRS-Charging-Id                [2] INTEGER OPTIONAL,
            accessNetworkChargingIdentifier [4] GraphicString OPTIONAL
            cS-Charging-Id
           };
```

Step 590: The CDF sends an ACA ANM to the AS.

Step 600: The charging system correlates the charging information according to the call ID.

The charging system receives the CDR from the AS, identifies the correlation ID field in the CDR, that is, the cS-Charging-Id in the AccessCorrelationID field according to the CDR type, and performs correlation on related charging information received from NEs in the IMS domain and the CS domain based on the identified charging correlation ID. The specific correlation method includes: searching the CDR reported by the MSC server for the callReference field; if the value of the callReference field is equal to the cS-Charging-Id in the CDR reported by the AS, regarding the CDR as a correlated CDR, and performing correlation, for example, combining and subtracting.

By using the method for correlating charging information in this embodiment, the CR or the NCR in the CS domain is sent to the IMS domain; the information is extracted by the AS in the IMS domain, and the call ID is carried in the reported charging information, so that the charging information is correlated. Because the call ID is already included in the charging information of the CS domain, only the charging information reported by the AS needs to be extended. In addition, this method may be applicable to all scenarios in which the charging information in the CS domain and the IMS domain is correlated, therefore featuring good universality.

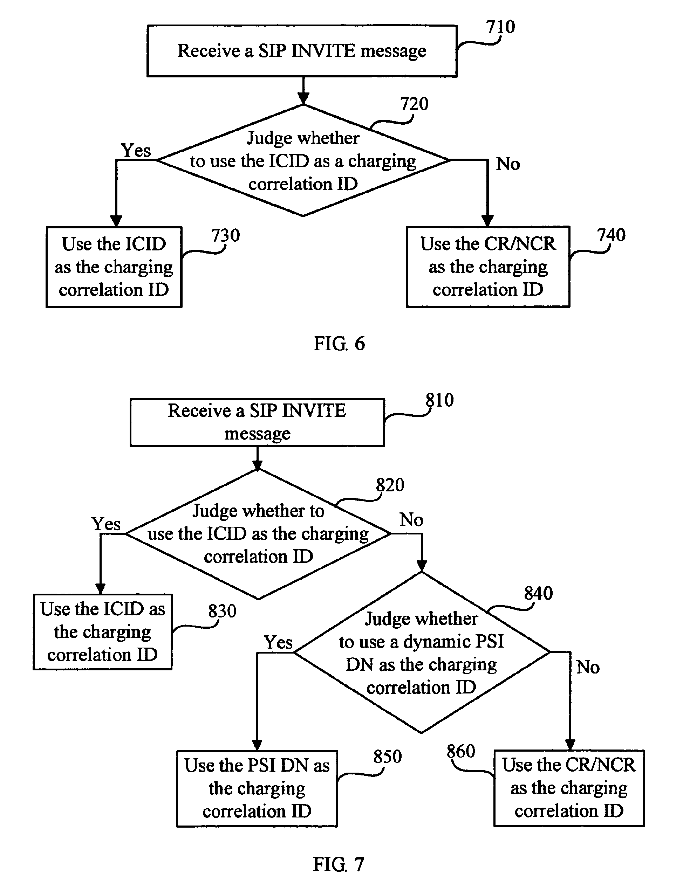

FIG 6 is a flowchart of a method for correlating charging information in an embodiment of the present invention. In this embodiment, the type of charging correlation ID is selected according to different scenarios, and the corresponding charging information is reported. In this embodiment, the ICID or the CR is used as the charging correlation ID. The method includes the following steps:

In the CS domain: If the MSC server enhances the ICS capability, the externalChargingID is carried in the generated CDR; if the MSC server does not enhance the ICS capability, an ordinary CDR is generated.

The SCC AS in the IMS domain performs the following processing:
Step 710: The SCC AS receives a SIP INVITE message.
Step 720: The SCC AS judges whether to use the ICID as a charging correlation ID; if so, the process goes to step 730; otherwise, the process goes to step 740.

Specifically, the SCC AS makes the judgment in the following mode:

For a mobile originated call, the SCC AS judges whether the calling UE registers with the IMS domain through the MSC server; if so, the SCC AS uses the ICID as the correlation ID; otherwise, it uses the CR as the correlation ID.

Or the SCC AS analyzes the Via header field of the SIP INVITE message, for example:
via: SIP/2.0/UDP scscf1.home1.net;branch=29hG4bK332b23.1,
SIP/2.0/UDP msc1.home1.net;branch=z9hG4bK332b23.1

The SCC AS judges whether the Via header field includes the MSC node; if so, the SCC AS uses the ICID as the charging correlation ID; otherwise, it uses the CR as the correlation ID. For a mobile terminated call, the SCC AS judges whether the called UE registers with the IMS domain through the MSC server; if so, the SCC AS uses the ICID as the correlation ID; otherwise, it uses the CR as the correlation ID.

Step 730: The SCC AS uses the ICID as the charging correlation ID of the charging information in the IMS domain and the CS domain.

The process of reporting charging information and correlating the charging information is the same as that shown in FIG 3, and is not further described.

Step 740: The SCC AS uses the CR/NCR as the charging correlation ID of the charging information in the IMS domain and the CS domain.

The process of reporting charging information and correlating the charging information is the same as that shown in FIG 5, and is not further described.

By using the method for correlating charging information in this embodiment, the SCC AS judges the scenarios, and selects different correlation IDs. In this way, the most proper and simple correlation ID may be selected in different scenarios, therefore greatly simplifying the correlation performed by the charging system.

FIG 7 is a flowchart of a method for correlating charging information in an embodiment of the present invention. In this embodiment, the type of charging correlation ID is selected according to different scenarios, and the corresponding charging information is reported. In this embodiment, the ICID or the PSI DN, or the CR is used as the correlation ID. The method includes the following steps:

In the CS domain: If the MSC server enhances the ICS capability, the externalChargingID is carried in the generated CDR; if the MSC server does not enhance the ICS capability, an ordinary CDR is generated.

The SCC AS in the IMS domain performs the following processing:
Step 810: The SCC AS receives a SIP INVITE message.
Step 820: The SCC AS judges whether to use the ICID as a charging correlation ID; if so, the process goes to step 830; otherwise, the process goes to step 840.

Specifically, the SCC AS makes this judgment in the following mode:

For a mobile originated call, the SCC AS judges whether the calling UE registers with the IMS domain through the MSC server; if so, the SCC AS uses the ICID as the correlation ID; otherwise, it continues to make judgment.

Or the SCC AS analyzes the Via header field of the SIP INVITE message, for example:
via: SIP/2.0/UDP scscf1.home1.net;branch=29hG4bK332b23.1,
SIP/2.0/UDP msc1.home1.net;branch=z9hG4bK332b23.1

The SCC AS judges whether the Via header field includes the MSC node; if so, the SCC AS uses the ICID as the correlation ID; otherwise, it continues to make judgment.

For a mobile terminated call, the SCC AS judges whether the called UE registers with the IMS domain through the MSC server; if so, the SCC AS uses the ICID as the correlation ID; otherwise, it continues to make judgment.

Step 830: The SCC AS uses the ICID as the charging correlation ID of the charging information in the IMS domain and the CS domain.

The process of reporting charging information and correlating the charging information is the same as that shown in FIG 3, and is not further described.

Step 840: The SCC AS judges whether to use a dynamic PSI DN as the charging correlation ID. The specific judgment method is as follows: If the user calls a PSI DN dynamically allocated by the SCC AS, the process goes to step 850; otherwise, the process goes to step 860.

Step 850: The SCC AS uses the PSI DN as the charging correlation ID of the charging information in the IMS domain and the CS domain.

The process of reporting charging information and correlating the charging information is the same as that shown in FIG 4, and is not further described.

Step 860: The SCC AS uses the CR as the charging correlation ID of the charging information in the IMS domain and the CS domain.

The process of reporting charging information and correlating the charging information is the same as that shown in FIG 5, and is not further described.

By using the method for correlating charging information in this embodiment, the SCC AS judges the scenarios, and selects different correlation IDs. In this way, the most proper and simple correlation ID may be selected in different scenarios, therefore greatly simplifying the correlation performed by the charging system.

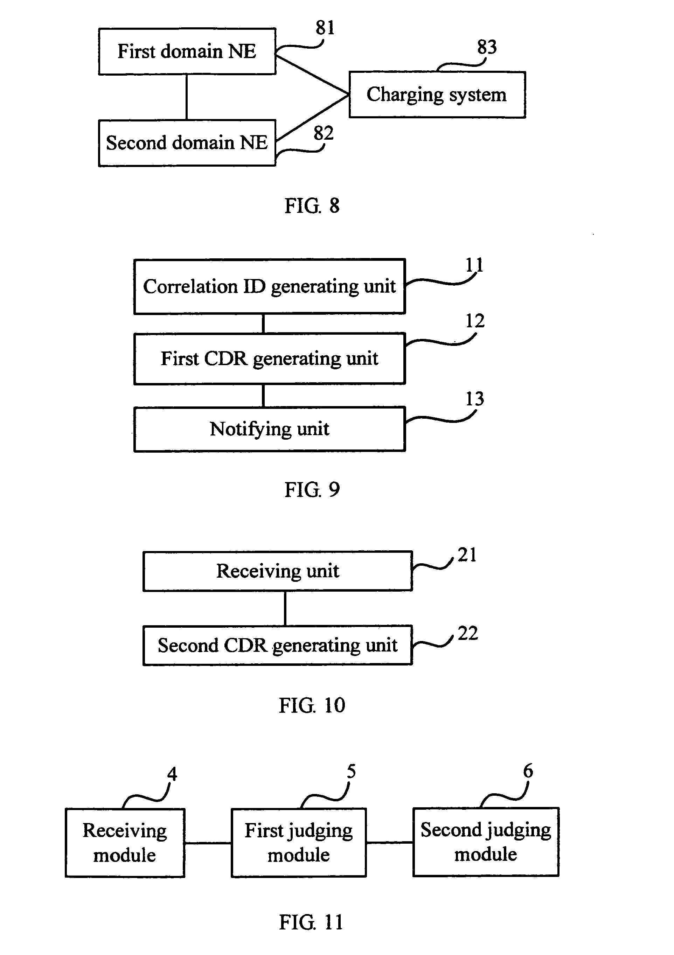

FIG 8 shows a structure of a system for correlating charging information in an embodiment of the present invention. The system includes a first domain NE 81 that communicates with a second domain NE 82.

The first domain NE 81 is adapted to generate a charging correlation ID, report charging information that includes the charging correlation ID to a charging system 83, and send the charging correlation ID to a second domain.

The second domain NE 82 is adapted to report charging information that includes the charging correlation ID to the charging system 83, so that the charging system 83 correlates the charging information reported by a first domain with the charging information reported by the second domain.

Further, FIG. 9 shows a structure of the first domain NE in this embodiment. The first domain NE includes: a correlation ID generating unit 11 adapted to generate a charging correlation ID; a first CDR generating unit 12 adapted to generate a CDR that includes the charging correlation ID, and send the CDR to the charging system; and a notifying unit 13 adapted to generate a message that carries the charging correlation ID, and send the message to the second domain NE. The first CDR generating unit adds a field to the sub record of the CSRecord to store the ICID.

Specifically, in this embodiment, the first domain may be the CS domain, and the second domain may be the IMS domain; or the first domain is the IMS domain, and the second domain is the CS domain. When the first domain is the CS domain, the first domain NE may be the MSC server in the CS domain; the MSC server may generate an ICID or a CS call ID that is used as the charging ID, generate a SIP message that carries the ICID or the CS call ID, and send the SIP message to the IMS NE. The CS NE may include a signaling transfer entity and the MSC server. The correlation ID generating unit and the notifying unit are located in the signaling transfer entity, and the CDR generating unit is located on the MSC server. When the signaling transfer entity receives a SIP message sent from the IMS NE, it generates a CS call ID and uses the CS call ID as the charging correlation ID; the signaling transfer entity carries the CS call ID in the ANM of the received SIP message, and sends the ANM to the IMS NE.

When receiving a CS call ID sent by the CS NE, the IMS NE carries the CS call ID in the ACR command, and sends the ACR command to the CDF; the CDF carries the CS call ID in the AccessCorrelationID field of the CDR, and sends the CDR to the charging system.

In this embodiment, when the first domain NE is the IMS NE and the second domain NE is the CS NE, the charging correlation ID may be the ICID or the PSI DN. When the charging correlation ID is the ICID, the second domain NE includes: a receiving unit, adapted to receive a SIP message that is sent by the IMS NE and carries the ICID generated by the IMS NE; and a second CDR generating unit, adapted to generate a CDR that includes the ICID, and send the CDR to the charging system. The second CDR generating unit adds a field to the sub record of the CSRecord to store the ICID.

The IMS NE may be the AS or the CSCF. Specifically, when the first domain NE is the IMS NE, the AS or the CSCF may generate an ICID or a PSI DN that is used as the charging ID. If the IMS NE generates an ICID, the structure of the CS NE is shown in FIG 10. FIG 10 shows a structure of the second domain NE in this embodiment. The second domain NE may include: a receiving unit 21, adapted to receive a SIP message that is sent by the IMS NE and carries the ICID generated by the IMS NE; and a second CDR generating unit 22, adapted to generate a CDR that includes the ICID, and send the CDR to the charging system.

Further, the system for correlating charging information in this embodiment further includes a charging system 83 adapted to correlate the charging information reported by the first domain NE with the charging information reported by the second domain NE according to the charging correlation ID.

The specific implementation of the previous process is described in the method embodiment of the present invention, and is not further described.

FIG 11 shows a structure of a system for correlating charging information in an embodiment of the present invention. As shown in FIG 11, the system includes a receiving module 4 and a first judging module 5. The receiving module 4 is adapted to receive a call. The first judging module 5 is adapted to judge whether the call uses the ICID as the charging correlation ID; if so, use the ICID as the charging correlation ID; otherwise, use the CS call ID and/or the PSI DN as the charging correlation ID.

Specifically, for a mobile originated call, the first judging module 5 is adapted to judge whether the Via header field of the SIP message for calling includes an MSC node, and if so, determine that the mobile originated call uses the ICID as the charging correlation ID.

For a mobile terminated call, the first judging module 5 is adapted to judge whether a called UE registers with the IMS domain through the MSC server, and if so, determine that the mobile terminated call uses the ICID as the charging correlation ID.

The first judging module 5 is further adapted to: judge whether the calling UE in the case of a mobile originated call or the called UE in the case of a mobile terminated call registers with the IMS domain through the MSC server; if so, determine that the call uses the ICID as the charging correlation ID.

When the first judging module 5 determines that the ICID is not used as the charging correlation ID, the system for correlating charging information in this embodiment further includes a second judging module. The second judging module is adapted to judge whether the called number is the PSI DN dynamically allocated by the AS; if so, use the PSI DN as the charging correlation ID; otherwise, use the CS call ID as the charging correlation ID.

Those skilled in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a read only memory (ROM), a random access memory (RAM), a magnetic disk, or a compact disk-read only memory (CD-ROM).

It should be notes that: Although the present invention is described through some exemplary embodiments, the invention is not limited to such embodiments. It is apparent that those skilled in the art can make various modifications and variations to the invention without departing from the scope of the invention. The invention is intended to cover the modifications and variations provided that they fall within the scope of protection defined by the following claims or their equivalents.

## Claims

1. A method for selecting the type of charging correlation ID in a Circuit Switched, CS, domain and an IP multimedia subsystem, IMS, domain, comprising:
receiving (710, 810), by an Application Server, AS, of the IMS domain, a call, and judging (720, 820), by the AS whether the call uses an IP multimedia subsystem, IMS, charging identifier, ICID, as a charging correlation identifier, ID;
wherein the judging whether the call uses the ICID as the charging correlation ID comprises:
(A) for a mobile originated call, the AS judging whether the calling user equipment, UE, registers with the IMS domain through a mobile switching center, MSC, server in the CS domain; if so, the AS uses (730, 830) the ICID (260) as the correlation ID, otherwise it uses a CS call ID (580) or a public service identifier directory number, PSI DN, (380) as the charging correlation ID, or
the AS judging whether a Via header field of the Session Initiation Protocol, SIP, for calling comprises an MSC node; if the Via header field for calling comprises the MSC node, determining that the mobile originated call uses (730, 830) the ICID as the charging correlation ID, otherwise determining that it uses a CS call ID (580) or a public service identifier directory number, PSI DN, (380) as the charging correlation ID; and
(B) for a mobile terminated call, the AS judging whether a called user equipment, UE, registers with the IMS domain through the MSC server; if the called UE registers with the IMS domain through the MSC server, determining that the mobile terminated call uses (730, 830) the ICID (260) as the charging correlation ID, otherwise determining that it uses a CS call ID (580) or a public service identifier directory number, PSI DN, (380) as the charging correlation ID.

2. The method of claim 1, wherein the using a CS call ID or a PSI DN as the charging correlation ID comprises:
using (850), by the AS, the PSI DN (380) as the charging correlation ID if the user calls a PSI DN dynamically allocated by the AS; otherwise, using (860), by the AS, the CS call ID (580) as the charging correlation ID.

3. The method of claim 1 or 2, wherein the ICID is sent by the MSC server to the AS through the following way:
sending, by the MSC Server, a SIP INVITE message to the AS in the IMS domain through a call session control function, CSCF, wherein the ICID is carried in the P-Charging-Vector header field of the SIP message header.

4. The method of claim 1 or 2, wherein the PSI DN is sent by the MSC server to the AS through the following way:
obtaining, by the MSC Server, a PSI DN carried in a Setup message sent by the UE;
sending, by the MSC Server, an integrated services digital network user part, ISUP, initial address message, IAM, that carries the PSI DN to a media gateway control function, MGCF;
generating, by the MGCF, a SIP INVITE message according to the ISUP IAM sent by the server, wherein the PSI DN is carried in the SIP invite message; and
sending, by the MGCF, the SIP INVITE message to the AS through a call session control function, CSCF.

5. The method of claim 1 or 2, wherein the CS call ID is sent by the MSC server to the AS through the following way:
obtaining, by the MSC Server, a CS call ID carried in a Setup message sent by the UE;
sending, by the MSC Server, an integrated services digital network user part, ISUP, initial address message, IAM, that carries the CS call ID to a media gateway control function, MGCF;
generating, by the MGCF, a SIP INVITE message according to the ISUP IAM message sent by the server, wherein the CS call ID is carried in the SIP invite message; and
sending, by the MGCF, the SIP INVITE message to the AS through a call session control function, CSCF.

6. A charging correlation system in an IP multimedia subsystem, IMS, domain, comprising:
a receiving module (4), adapted to receive a call; and
a first judging module (5), adapted to judge whether the call uses an IMS identifier, ICID, as a charging correlation identifier, ID; wherein
(A) for a mobile originated call, the first judging module is adapted to judge whether the Via header field of the SIP message for calling includes an MSC node, and if so, determining that the mobile originated call uses (730, 830) the ICID as the charging correlation ID, otherwise use a CS call ID (580) or a public service identifier directory number, PSI DN (380), as the charging correlation ID;
judge whether the calling user UE registers with the IMS domain through the MSC server; if so, determine that the call uses (730, 830) the ICID (260) as the charging correlation ID, otherwise use a CS call ID (580) or a public service identifier directory number, PSI DN (380), as the charging correlation ID; and
(B) for a mobile terminated call, the first judging module is adapted to judge whether a called UE registers with the IMS domain through the MSC server, and if so, determining that the mobile terminated call uses (730, 830) the ICID (260) as the charging correlation ID, otherwise use a CS call ID (580) or a public service identifier directory number, PSI DN (380), as the charging correlation ID.

7. The charging correlation system of claim 6, further comprising:
a second judging module (6), adapted to: if determining that the ICID is not used as the charging correlation ID, judge whether a called number is the PSI DN dynamically allocated by an application server, AS; if the called number is the PSI DN, use (850) the PSI DN (380) as the charging correlation ID; if the called number is not the PSI DN, use (860) the CS call ID (580) as the charging correlation ID.

## Patentansprüche

1. Verfahren zum Auswählen der Art von Vergebührungskorrelations-ID in einer leitungsvermittelten bzw. CS-Domäne und einer Domäne des IP Multimedia Subsystem IMS, umfassend:
ein Anwendungsserver AS der IMS-Domäne empfängt (710, 810) einen Anruf und der AS beurteilt (720, 820), ob der Anruf eine Vergebührungskennung ICID des IP Multimedia Subsystem IMS als Vergebührungskorrelationskennung bzw. ID verwendet;
wobei das Beurteilen, ob der Anruf die ICID als die Vergebührungskorrelations-ID verwendet, Folgendes umfasst:
(A) für einen Anruf mit Mobilursprung beurteilt der AS, ob sich das anrufende Benutzergerät UE durch einen Server der Mobilvermittlungsstelle MSC in der CS-Domäne bei der IMS-Domäne registriert; wenn ja, verwendet (730, 830) der AS die ICID (260) als die Korrelations-ID; andernfalls verwendet er eine CS-Anruf-ID (580) oder eine öffentliche Dienstkennungs-Verzeichnisnummer PSI DN (380) als die Vergebührungskorrelations-ID, oder
der AS beurteilt, ob ein Via-Header-Feld des Session Initiation Protocol SIP zum Anrufen einen MSC-Knoten umfasst; wenn das Via-Header-Feld zum Anrufen den MSC-Knoten umfasst, wird bestimmt, dass der Anruf mit Mobilursprung die ICID als die Vergebührungskorrelations-ID verwendet (730, 830), andernfalls wird bestimmt, dass er eine CS-Anruf ID (580) oder eine öffentliche Dienstkennungs-Verzeichnisnummer PSI DN (380) als die Vergebührungskorrelations-ID verwendet; und
(B) für einen Anruf mit Mobilabschluss beurteilt der AS, ob sich ein angerufenes Benutzergerät UE durch den MSC-Server bei der IMS-Domäne registriert; wenn sich das angerufene UE durch den MSC-Server bei der IMS-Domäne registriert, wird bestimmt, dass der Anruf mit Mobilabschluss die ICID (260) als die Vergebührungskorrelations-ID verwendet (730, 830), andernfalls wird bestimmt, dass er eine CS-Anruf-ID (580) oder eine öffentliche. Dienstkennungs-Verzeichnisnummer PSI DN (380) als die Vergebührungskorrelations-ID verwendet.

2. Verfahren nach Anspruch 1, wobei das Verwenden einer CS-Anruf-ID oder einer PSI DN als die Vergebührungskorrelations-ID Folgendes umfasst:
der AS verwendet (850) die PSI DN (380) als die Vergebührungskorrelations-ID, wenn der Benutzer eine dynamisch durch den AS vergebene PSI DN anruft; andernfalls verwendet (860) der AS die CS-Anruf-ID (580) als die Vergebührungskorrelations-ID.

3. Verfahren nach Anspruch 1 oder 2, wobei die ICID durch den MSC-Server auf die folgende Weise zu dem AS gesendet wird:
der MSC-Server sendet eine Nachricht SIP INVITE zu dem AS in der IMS-Domäne durch eine Call Session Control Function CSCF, wobei die ICID in dem P-Charging-Vector-Header-Feld des SIP-Nachrichten-Headers geführt wird.

4. Verfahren nach Anspruch 1 oder 2, wobei die PSI DN durch den MSC-Server auf die folgende Weise zu dem AS gesendet wird:
der MSC-Server erhält eine PSI DN, die in einer durch das UE gesendeten Setup-Nachricht geführt wird;
der MSC-Server sendet eine Anfangsadressennachricht IAM des Integrated Services Digital Network User Part ISUP, die die PSI DN führt, zu einer Media Gateway Control Function MGCF;
die MGCF erzeugt eine Nachricht SIP INVITE gemäß der durch den Server gesendeten ISUP IAM, wobei die PSI DN in der Nachricht SIP INVITE geführt wird; und
die MGCF sendet die Nachricht SIP INVITE durch eine Call Session Control Function CSCF zu dem AS.

5. Verfahren nach Anspruch 1 oder 2, wobei die CS-Anruf-ID durch den MSC-Server auf die folgende Weise zu dem AS gesendet wird:
der MSC-Server erhält eine CS-Anruf-ID, die in einer durch das UE gesendeten Setup-Nachricht geführt wird;
der MSC-Server sendet eine Anfangsadressennachricht IAM des Integrated Services Digital Network User Part ISUP, die die CS-Anruf-ID führt, zu einer Media Gateway Control Function MGCF;
die MGCF erzeugt eine Nachricht SIP INVITE gemäß der durch den Server gesendeten ISUP IAM, wobei die CS-Anruf-ID in der Nachricht SIP INVITE geführt wird; und
die MGCF sendet die Nachricht SIP INVITE durch eine Call Session Control Function CSCF zu dem AS.

6. Vergebührungskorrelationssystem in einer Domäne des IP Multimedia Subsystem IMS, umfassend:
ein Empfangsmodul (4), das dafür ausgelegt ist, einen Anruf zu empfangen; und
ein erstes Beurteilungsmodul (5), das dafür ausgelegt ist, zu beurteilen, ob der Anruf eine IMS-Kennung ICID als eine Vergebührungskorrelationskennung ID verwendet;
wobei
(A) für einen Anruf mit Mobilursprung das erste Beurteilungsmodul dafür ausgelegt ist, zu beurteilen, ob das Via-Header-Feld der SIP-Nachricht zum Anrufen einen MSC-Knoten umfasst, und wenn ja bestimmt wird, dass der Anruf mit Mobilursprung die ICID als die Vergebührungskorrelations-ID verwendet (730, 830), andernfalls Verwenden einer CS-Anruf-ID (580) oder einer öffentlichen Dienstkennungs-Verzeichnisnummer PSI DN (380) als die Vergebührungskorrelations-ID; Beurteilen, ob sich das UE des anrufenden Benutzers durch den MSC-Server bei der IMS-Domäne registriert; wenn ja, Bestimmen, dass der Anruf die ICID (260) als die Vergebührungskorrelations-ID verwendet (730, 830); andernfalls Verwenden einer CS-Anruf-ID (580) oder einer öffentlichen Dienstkennungs-Verzeichnisnummer PSI DN (380) als die Vergebührungskorrelations-ID; und
(B) für einen Anruf mit Mobilabschluss das erste Beurteilungsmodul dafür ausgelegt ist, zu beurteilen, ob sich ein angerufenes UE durch den MSC-Server bei der IMS-Domäne registriert, und wenn ja, zu bestimmen, dass der Anruf mit Mobilabschluss die ICID (260) als die Vergebührungskorrelations-ID verwendet (730, 830) und andernfalls verwendet er eine CS-Anruf ID. (580) oder eine öffentliche Dienstkennungs-Verzeichnisnummer PSI DN (380) als die Vergebührungskorrelations-ID.

7. Vergebührungskorrelationssystem nach Anspruch 6, ferner umfassend:
ein zweites Beurteilungsmodul (6), das für Folgendes ausgelegt ist: wenn bestimmt wird, dass die ICID nicht als die Vergebührungskorrelations-ID verwendet wird, Beurteilen, ob eine angerufene Nummer die durch einen Anwendungsserver AS dynamisch vergebene PSI DN ist; wenn die angerufene Nummer die PSI DN ist, Verwenden (850) der PSI DN (380) als die Vergebührungskorrelations-ID; wenn die angerufene Nummer nicht die PSI DN ist, Verwenden (860) der CS-Anruf-ID (580) als die Vergebührungskorrelations-ID.

## Revendications

1. Procédé de sélection du type d'un identifiant de corrélation de facturation dans un domaine de commutation de circuits, dit CS, et un domaine de sous-système multimédia IP, dit IMS, comprenant les étapes suivantes :
réception (710, 810), par un serveur d'applications, dit AS, du domaine IMS, d'un appel, et évaluation (720, 820), par l'AS, si l'appel utilise un identifiant de facturation de sous-système multimédia IP, dit IMS, dit ICID, en guise d'identifiant, dit ID, de corrélation de facturation ;
l'étape d'évaluation si l'appel utilise l'ICID en guise d'ID de corrélation de facturation comprenant les étapes suivantes :
(A) pour un appel d'origine mobile, évaluation, par l'AS, si l'équipement d'utilisateur, dit UE, appelant s'enregistre auprès du domaine IMS par le biais d'un serveur de centre de commutation mobile, dit MSC, dans le domaine CS ; si tel est le cas, utilisation (730, 830), par l'AS, de l'ICID (260) en guise d'ID de corrélation, dans le cas contraire, utilisation, par l'AS, d'un ID d'appel CS (580) ou d'un numéro d'annuaire d'identifiant de service public, dit PSI DN, (380) en guise d'ID de corrélation de facturation, ou
évaluation, par l'AS, si un champ d'en-tête Via du protocole d'ouverture de session, dit SIP, pour l'appel contient un noeud MSC ; si le champ d'en-tête Via pour l'appel contient le noeud MSC, établissement que l'appel d'origine mobile utilise (730, 830) l'ICID en guise d'ID de corrélation de facturation, dans le cas contraire, établissement qu'il utilise un ID d'appel CS (580) ou un numéro d'annuaire d'identifiant de service public, dit PSI DN, (380) en guise d'ID de corrélation de facturation ; et
(B) pour un appel à destination mobile, évaluation, par l'AS, si un équipement d'utilisateur, dit UE, appelé s'enregistre auprès du domaine IMS par le biais du serveur MSC ; si l'UE appelé s'enregistre auprès du domaine IMS par le biais du serveur MSC, établissement que l'appel à destination mobile utilise (730, 830) l'ICID (260) en guise d'ID de corrélation de facturation, dans le cas contraire, établissement qu'il utilise un ID d'appel CS (580) ou un numéro d'annuaire d'identifiant de service public, dit PSI DN, (380) en guise d'ID de corrélation de facturation.

2. Procédé selon la revendication 1, l'étape d'utilisation d'un ID d'appel CS ou d'un PSI DN en guise d'ID de corrélation de facturation comprenant l'étape suivante :
utilisation (850), par l'AS, du PSI DN (380) en guise d'ID de corrélation de facturation si l'utilisateur appelle un PSI DN attribué dynamiquement par l'AS ; dans le cas contraire, utilisation (860), par l'AS, de l'ID d'appel CS (580) en guise d'ID de corrélation de facturation.

3. Procédé selon la revendication 1 ou 2, l'ICID étant envoyé par le serveur MSC à l'AS de la manière suivante :
envoi, par le serveur MSC, d'un message SIP INVITE à l'AS dans le domaine IMS par le biais d'une fonction de commande de session d'appel, dite CSCF, l'ICID étant contenu dans le champ d'en-tête P-Charging-Vector de l'en-tête de message SIP.

4. Procédé selon la revendication 1 ou 2, le PSI DN étant envoyé par le serveur MSC à l'AS de la manière suivante :
obtention, par le serveur MSC, d'un PSI DN contenu dans un message de configuration envoyé par l'UE ;
envoi, par le serveur MSC, d'un message initial d'adresse, dit IAM, de sous-système utilisateur de réseau numérique à intégration de services, dit ISUP, contenant le PSI DN à une fonction de commande de passerelle média, dite MGCF ;
génération, par la MGCF, d'un message SIP INVITE compte tenu du ISUP IAM envoyé par le serveur, le PSI DN étant contenu dans le message SIP INVITE ; et
envoi, par la MGCF, du message SIP INVITE à l'AS par le biais d'une fonction de commande de session d'appel, dite CSCF.

5. Procédé selon la revendication 1 ou 2, l'ID d'appel CS étant envoyé par le serveur MSC à l'AS de la manière suivante :
obtention, par le serveur MSC, d'un ID d'appel CS contenu dans un message de configuration envoyé par l'UE ;
envoi, par le serveur MSC, d'un message initial d'adresse, dit IAM, de sous-système utilisateur de réseau numérique à intégration de services, dit ISUP, contenant l'ID d'appel CS à une fonction de commande de passerelle média, dite MGCF ;
génération, par la MGCF, d'un message SIP INVITE compte tenu du message ISUP IAM envoyé par le serveur, l'ID d'appel CS étant contenu dans le message SIP INVITE ; et
envoi, par la MGCF, du message SIP INVITE à l'AS par le biais d'une fonction de commande de session d'appel, dite CSCF.

6. Système de corrélation de facturation dans un domaine de sous-système multimédia IP, dit IMS, comprenant :
un module de réception (4), conçu pour recevoir un appel ; et
un premier module d'évaluation (5), conçu pour évaluer si l'appel utilise un identifiant IMS, dit ICID, en guise d'identifiant, dit ID, de corrélation de facturation ;
(A) pour un appel d'origine mobile, le premier module d'évaluation étant conçu pour évaluer si le champ d'en-tête Via du message SIP pour l'appel contient un noeud MSC et, si tel est le cas, établir que l'appel d'origine mobile utilise (730, 830) l'ICID en guise d'ID de corrélation de facturation, dans le cas contraire, utiliser un ID d'appel CS (580) ou un numéro d'annuaire d'identifiant de service public, dit PSI DN, (380) en guise d'ID de corrélation de facturation ;
évaluer si l'équipement d'utilisateur, dit UE, appelant s'enregistre auprès du domaine IMS par le biais du serveur MSC ; si tel est le cas, établir que l'appel utilise (730, 830) l'ICID (260) en guise d'ID de corrélation de facturation, dans le cas contraire, utiliser un ID d'appel CS (580) ou un numéro d'annuaire d'identifiant de service public, dit PSI DN, (380) en guise d'ID de corrélation de facturation ; et
(B) pour un appel à destination mobile, le premier module d'évaluation étant conçu pour évaluer si un UE appelé s'enregistre auprès du domaine IMS par le biais du serveur MSC et, si tel est le cas, établir que l'appel à destination mobile utilise (730, 830) l'ICID (260) en guise d'ID de corrélation de facturation, dans le cas contraire, utiliser un ID d'appel CS (580) ou un numéro d'annuaire d'identifiant de service public, dit PSI DN, (380) en guise d'ID de corrélation de facturation.

7. Système de corrélation de facturation selon la revendication 6, comprenant en outre :
un deuxième module d'évaluation (6), conçu pour : s'il est établi que l'ICID n'est pas utilisé en guise d'ID de corrélation de facturation, évaluer si un numéro appelé est le PSI DN attribué dynamiquement par un serveur d'applications, dit AS ; si le numéro appelé est le PSI DN, utiliser (850) le PSI DN (380) en guise d'ID de corrélation de facturation ; si le numéro appelé n'est pas le PSI DN, utiliser (860) l'ID d'appel CS (580) en guise d'ID de corrélation de facturation.
